# FASCICULE DE BREVET EUROPEEN

(11) **EP 3 177 573 B1**
(45) Date de publication et mention de la délivrance du brevet: **04.09.2024**
(21) Numéro de dépôt: 15767272.6
(22) Date de dépôt: 30.07.2015
(51) Int. Cl.: C02F 3/12, C02F 3/00, C02F 3/30

(54) **INSTALLATION ET PROCEDE BATCH SEQUENCE POUR REDUIRE LA TENEUR EN AZOTE DANS LES EAUX RESIDUAIRES**
SEQUENCING-BATCH-ANLAGE ZUR VERRINGERUNG DES STICKSTOFFGEHALTS IN ABWÄSSERN
SEQUENCING BATCH FACILITY AND METHOD FOR REDUCING THE NITROGEN CONTENT IN WASTE WATER

(30) Priorité: 08.08.2014 FR 1457700
(43) Date de publication de la demande: 14.06.2017
(73) Titulaire: Suez International, 92040 Paris la Défense Cedex (FR)
(72) Inventeur: GINESTET, Philippe, 78117 Chateaufort (FR); GRAVELEAU BILLÉMAZ, Laure, 94260 Fresnes (FR)
(74) Mandataire: Lavoix
(86) Numéro de dépôt international: PCT/IB2015/055768
(87) Numéro de publication internationale: WO 2016/020805

(56) Documents cités:
- WO-A1-2013/041893
- DE-A1- 102009 039 316
- FR-A1- 2 976 937
- US-A- 5 395 527
- US-A1- 2003 111 412
- US-A1- 2012 261 335
- US-A1- 2013 075 327
- US-A1- 2014 097 136
- US-B1- 6 884 354
- "Handbook of Biological Wastewater Treatment", 1 January 2012, IWA, article VAN HAANDEL A.C. ET AL: "3.5 Configurations of the activated sludge system. Appendix 9", pages: 78 - 81, 756-77, XP055882898
- "Sequencing Batch Reactor Technology", 1 January 2001, IWA, article WILDERER PEETER A. ET AL: "3. General overview of SBR applications, 5. Equipment and instrumentation", pages: 17 - 31, 37-49, XP055882890

## Description

L'invention est relative à un procédé de traitement d'effluents contenant de l'azote sous forme d'ammonium, mettant en oeuvre des réactions chimiques d'oxydation et réduction de l'azote dans un réacteur batch séquencé.

On appelle réacteur « batch séquence » un réacteur destiné à traiter successivement des quantités finies de liquide, par opposition notamment à une installation traitant le liquide en continu.

On connaît un tel procédé comprenant :
- une étape d'alimentation, au cours de laquelle on introduit un volume d'effluents à traiter dans le réacteur,
- au moins une première étape d'aération, au cours de laquelle on injecte de l'oxygène ou de l'air dans le réacteur pour une oxydation de l'ammonium,
- une deuxième étape, en anoxie, au cours de laquelle en interrompant l'injection d'oxygène ou d'air on produit de l'azote gazeux,
- une étape de décantation, au cours de laquelle des boues se déposent au fond du réacteur et le contenu du réacteur se clarifie à proximité de sa surface,
- une étape de vidange, au cours de laquelle on évacue une fraction clarifiée du contenu du réacteur,
lesdites étapes de vidange et d'alimentation ayant lieu simultanément.

Toutefois, il est compliqué de réaliser un traitement à la fois assez rapide pour absorber le débit d'effluents ou eaux résiduaires entrants dans un réacteur et assez efficient pour traiter des effluents et plus particulièrement l'azote sous forme d'ammonium.

On connaît du document US2014/097136A1 une installation comprenant un réacteur de micro-organisme en amont d'un réacteur batch séquencé afin d'éviter des interférences entre les réactions chimiques.

On connaît du document WO2013/041893A1 un réacteur batch séquencé comprenant deux compartiments : un premier compartiment pour mixer les eaux usées avec la biomasse et un second compartiment pour réaliser les réactions chimiques.

On connaît du document US2003/111412A1 un réacteur batch séquencé comprenant une chambre inférieure dans laquelle les eaux usées sont introduites, une chambre supérieure dans laquelle les eaux usées sont aérées, et un filtre permettant de réaliser un filtrage biologique.

On connaît du document US2013/075327A1 un procédé dans lequel il est prévu d'alimenter un réacteur en granules fragmentés de boue aérobique afin de réduire le temps de démarrage.

On connaît du document FR2976937A1 un procédé séquencé de traitement biologique d'eau mettant en oeuvre des granules de biomasse.

On connaît du document US2012/261335A1 un procédé de traitement d'eau chargée en azote sous forme d'ammonium dans lequel il est prévu de mesurer en continue la concentration en nitrites de l'eau présent dans un réacteur batch séquencé.

Le but de la présente invention est de remédier en tout ou partie aux problèmes précédents par un nouveau procédé de traitement.

L'invention a pour but, surtout, de réduire la durée et d'améliorer l'efficience du procédé de traitement d'effluents contenant de l'azote sous forme d'ammonium.

L'invention a aussi pour but d'améliorer la régulation et la maîtrise des réactions chimiques de traitement de l'azote dans un réacteur batch séquencé. Chacune de ces deux réactions nécessite des conditions spécifiques afin de garantir un traitement suffisamment complet dans un cadre industriel où les risques de dérive sont importants.

Un autre but de l'invention est de réduire la consommation d'énergie, notamment celle liée à l'apport en oxygène.

Encore un autre but de l'invention est de réduire la quantité de boues produite lors du traitement.

En outre l'invention a pour but de réduire ou même supprimer l'utilisation de carbone externe pour la dénitrification.

Selon l'invention, le procédé de traitement d'effluents contenant de l'azote sous forme d'ammonium, du genre défini précédemment, est caractérisé en ce que lors de l'étape d'alimentation, on introduit le volume d'effluents à traiter près du fond du réacteur, et en ce que lors de l'étape de vidange, on évacue la fraction clarifiée du contenu du réacteur à un niveau d'évacuation prédéfini proche de la surface du contenu du réacteur.

Le procédé selon l'invention, prévoit de maintenir le niveau du contenu du réacteur sensiblement constant lors des étapes de vidange et d'alimentation.

Le procédé selon l'invention est défini plus en détail dans la revendication 1. Des caractéristiques préférées du procédé selon l'invention sont définies dans les revendications dépendantes 2-9. Par ailleurs l'invention a aussi trait à une installation pour la mise en oeuvre du procédé, qui est définie dans la revendication 10.

De manière préférentielle, lors du procédé, on peut introduire le volume d'effluents à traiter dans le lit de boues, de préférence intimement et uniformément de manière à favoriser l'homogénéisation des boues avec les effluents. On peut introduire le volume d'effluents à traiter par une injection dirigée vers un fond du réacteur de façon à générer des turbulences dans le lit de boues se trouvant au fond du réacteur. Par exemple, on peut introduire le volume d'effluents à traiter par au moins un tube perforé de trous orientés vers le fond du réacteur. Les trous peuvent être munis de déflecteurs, chaque trou étant apte à provoquer des turbulences sur sensiblement 10 m² du fond du réacteur.

Selon l'invention, le procédé prévoit qu'on stoppe les étapes d'alimentation et de vidange lorsque le lit de boues s'expanse au-dessus d'un niveau de référence dans le réacteur, le niveau de référence étant choisi à une distance prédéterminée en-dessous d'un niveau d'évacuation où est prélevé le contenu lors de l'étape de vidange. Par exemple, un message d'alerte est remonté en supervision lorsque le lit de boues s'expanse au-dessus du niveau maximum.

De préférence, on détecte le niveau du lit de boues dans le réacteur par un capteur de matière en suspension placé sensiblement au niveau de référence. Le capteur de matière en suspension détecte la concentration en boues. Lorsque la concentration détectée dépasse une valeur prédéterminée, on interrompt simultanément les étapes de vidange et d'alimentation. La concentration en boues est de préférence comprise entre 1 et 10 g/L.

De préférence selon l'invention un capteur de fond de réacteur détecte l'épaisseur du lit de boues et/ou détecte si cette épaisseur dépasse un seuil prédéterminé, et on décharge les boues lorsque l'épaisseur dépasse un seuil prédéterminé.

Selon encore une autre particularité de l'invention, on peut renvoyer à l'alimentation le contenu évacué lors de l'étape de vidange si le contenu évacué présente une concentration en matières en suspension sensiblement supérieure à une valeur d'évacuation prédéterminée.

Suivant un autre aspect de l'invention, il est proposé une installation de traitement d'effluents de l'azote sous forme d'ammonium comprenant un réacteur batch séquencé, un dispositif d'alimentation d'un volume d'effluents près du fond du réacteur, un système de reprise d'une fraction clarifiée du contenu du réacteur, proche de la surface du contenu du réacteur, un système d'extraction de boues et des moyens d'aération et de brassage, le réacteur étant agencé et équipé selon l'invention pour la mise en œuvre dudit procédé, l'installation étant définie plus précisément dans la revendication 10.

L'invention prévoit, en plus des dispositions exposées ci-dessus, un certain nombre d'autres dispositions dont il sera plus explicitement question ci-après à propos d'exemples de réalisation décrits avec référence aux dessins annexés, qui ne sont nullement limitatifs. Sur ces dessins :
- la figure 1 montre en coupe verticale schématique une installation selon l'invention avec un réacteur batch séquencé, dans quatre vues illustrant les principales étapes du procédé.
- la figure 2 est un diagramme illustrant les variations des concentrations en N-NH4, N-NO2, N-NO3 et de la concentration en boues en fonction du temps porté en abscisse, au cours des étapes du procédé.

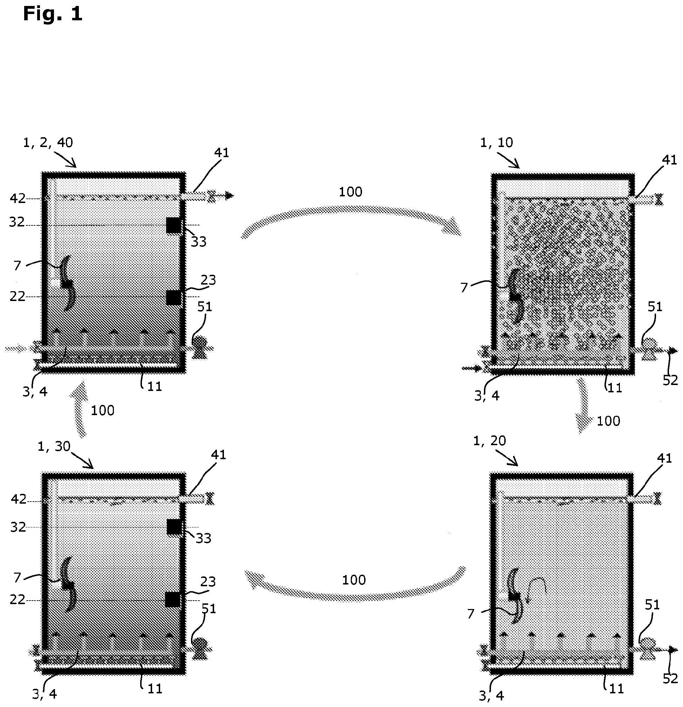

L'installation (figure 1) pour le traitement d'effluents contenant de l'azote sous forme d'ammonium comprend un réacteur batch séquencé 1, par exemple sous forme d'un bassin, dans lequel on introduit des effluents à traiter.

Un dispositif d'alimentation 3 pour introduire dans le réacteur les effluents à traiter comprend une pompe dont l'aspiration est reliée à l'extérieur du réacteur 1 et dont le refoulement débite dans un tube d'alimentation 4 débouchant dans le réacteur 1, à faible distance au-dessus du fond du réacteur, préférentiellement à moins de 1 m du fond.

Un système de reprise 41 pour la vidange d'une fraction clarifiée du contenu du réacteur 1 comprend un ou plusieurs orifices d'admission situés dans le réacteur 1 à une distance aussi faible que possible au-dessous de la surface du contenu du réacteur 1.

Des moyens d'aération 11 sont notamment formés par des diffuseurs aptes à injecter dans le réacteur 1 des fines et/ou moyennes bulles, placés dans le réacteur 1, de préférence près du fond du réacteur 1, ou tout autre système d'apport d'oxygène.

Un système d'extraction 51 de boues en excès comporte une pompe dont l'aspiration est placée dans le réacteur 1, près du fond du réacteur 1. Le refoulement de la pompe débite dans un tube de rejet.

Un moyen d'agitation mécanique 7 est prévu dans le réacteur 1.

L'installation comprend au moins quatre capteurs ou sondes à l'intérieur du réacteur pour mesurer la concentration respectivement en ammonium N-NH4, en nitrites N-NO2, en nitrates N-NO3 et en matières en suspension HLB.

Les différents capteurs sont reliés à des moyens de calcul (non représentés) constitués par un ordinateur ou contrôleur qui traite les mesures en temps réel et permet de contrôler le déroulement du procédé de traitement en mode automatique.

De cette manière, le réacteur 1 est agencé et équipé pour la mise en oeuvre d'un procédé de traitement d'effluents selon l'invention.

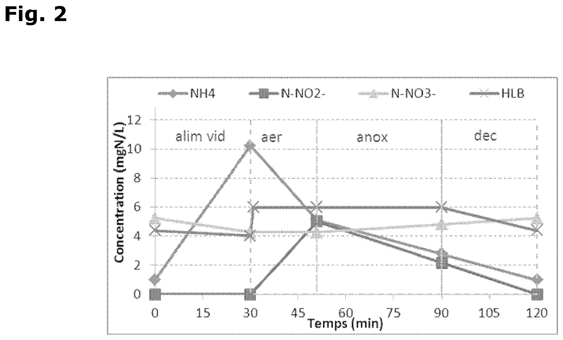

Le procédé de traitement d'effluents est illustré par les figures 1 et 2.

La figure 1 illustre un réacteur 1 dans quatre états différents correspondant à des étapes différentes du procédé de traitement d'effluents. Les flèches 100 indiquent le sens du séquencement des différentes étapes.

Le diagramme de la figure 2 illustre les concentrations en ammonium, en nitrites, en nitrates et en boues en fonction du temps et des différentes étapes du procédé. Le temps en minutes (min) est porté en abscisse, tandis que la concentration en milligrammes par litre (mg/L) est portée en ordonnée. Les concentrations en ammonium, en nitrites, en nitrates et la hauteur du lit de boues sont illustrées par des courbes présentant respectivement des losanges, des carrés, des triangles et des croix.

Le procédé de traitement d'effluents comprend une double étape d'alimentation 2 et de vidange 40 « alim vid » au cours de laquelle on introduit un volume d'effluents contenant de l'azote (augmentant la concentration en NH4) et simultanément on prélève un volume clarifié, une première étape d'aération 10 « aer » au cours de laquelle a lieu une oxydation d'une partie de l'ammonium en nitrites, une deuxième étape en anoxie 20 « anox » au cours de laquelle les nitrites produits et l'ammonium restant réagissent ensemble pour produire de l'azote gazeux ; une étape de décantation 30 « dec » au cours de laquelle les nitrites, et l'ammonium continuent d'être consommés, tandis que des boues se déposent progressivement au fond du réacteur 1.

Les procédés traitant l'ammonium grâce aux réactions de nitritation et de dé-ammonification mettent en oeuvre deux réactions distinctes très différentes rappelées ci-après.

### Nitritation

Cette transformation de l'ammonium en nitrites a lieu en présence d'oxygène non limitant par des bactéries nitritantes (AOB), selon l'équation :

2NH₄⁺+ 1.695 O₂ → 1.13NO₂⁻ + 0.87NH₄⁺

Avec :
un rapport N-NO2 produit / N-NH4 admis sensiblement égal à 0,565
un rapport O2 / N-NO2 produit sensiblement égal à 3,43.

### Réaction de dé-ammonification

Cette transformation a lieu selon l'équation :

0.87NH₄⁺ + 1.13 NO₂⁻ → 0.89 N₂ + 0.22 NO₃⁻

Avec :
un rapport N-NO2 produit/N-NH4 admis sensiblement égal à 0,57
un rapport N-NO3 produit/N-NH4 admis sensiblement égal à 0,110
un rapport N-N2 produit/N-NH4 admis sensiblement égal à 0,890.

On remarque, à partir des équations, que la première réaction convertit l'ammonium NH4 en nitrites NO2, tandis que la seconde réaction combine l'ammonium et les nitrites pour former de l'azote gazeux N2 et des nitrates NO3.

Le rendement de la première réaction est fonction de plusieurs éléments parmi lesquels :
- l'activité des bactéries impliquées,
- la présence d'oxygène,
- la concentration en NH4, et
- l'absence d'inhibiteur.

Le rendement de la seconde réaction est fonction de plusieurs éléments parmi lesquels :
- l'activité des bactéries impliquées,
- les conditions de milieu, en particulier absence d'oxygène libre, alcalinité suffisante,
- la concentration des deux substrats NH4 et NO2, et
- l'absence d'inhibiteur.

Concernant la concentration des deux substrats NH4 et NO2, il faut, d'une part, que ces substrats soient en concentration suffisante, et d'autre part, qu'ils soient en concentration relative satisfaisante pour permettre leur élimination totale.

La concentration en N-NH4 souhaitée en fin de l'étape d'aération est de préférence égale à la moitié de la concentration initiale en N-NH4. D'autre part, outre l'importance de la régulation de la première étape d'aération 10 et de la deuxième étape 20 en anoxie, on remarque que l'apport en ammonium, c'est-à-dire en effluents tout comme l'activité des bactéries sont également primordiaux.

L'invention a pour but d'établir des règles de fonctionnement d'un tel réacteur, et les consignes de régulation pour satisfaire les conditions de traitement. La régulation porte à la fois sur l'étape d'alimentation, et sur l'étape de vidange.

En se reportant à figure 1, le procédé de traitement d'effluents contenant de l'azote sous forme d'ammonium, mettant en oeuvre des réactions chimiques de nitritation et dé-ammonification dans un réacteur batch séquencé, comprend une séquence de quatre étapes qui est exécutée cycliquement :
- une étape combinée d'alimentation 2 et de vidange 40, au cours de laquelle on introduit un volume d'effluents à traiter dans le réacteur 1 et simultanément on évacue une fraction clarifiée du contenu du réacteur 1,
- au moins une première étape d'aération 10, au cours de laquelle on injecte de l'oxygène ou de l'air dans le réacteur 1 pour une oxydation partielle de l'ammonium en nitrites,
- une deuxième étape 20, en anoxie, au cours de laquelle en interrompant l'injection d'oxygène ou d'air on fait réagir les nitrites produits et l'ammonium restant pour produire de l'azote gazeux,
- une étape de décantation 30, au cours de laquelle la réaction de dé-ammonification se poursuit dans le lit de boues et/ou des boues se déposent au fond du réacteur 1 et le contenu du réacteur se clarifie à proximité de sa surface.

Le fonctionnement du réacteur 1 suivant seulement quatre étapes permet de réduire la durée du procédé de traitement. De préférence, les quatre étapes sont très courtes : de l'ordre de 20 à 30 minutes chacune, mais pouvant être plus longues ou plus courtes (raccourcies) selon les besoins. Par exemple, la première étape d'aération 10 et/ou la deuxième étape en anoxie 20 et/ou l'étape de décantation 30 peuvent être raccourcies afin d'accroître la pression de sélection sur ces populations susceptibles de croître en agrégats denses présentant une très forte décantabilité (pouvant aller jusqu'aux « granules »). Cette faculté permet d'accroître la capacité hydraulique (c'est-à-dire de traiter de forts débits d'effluents) et massique de traitement de l'installation et de limiter la taille de l'installation. De plus, pour faciliter l'exploitation d'un tel réacteur, il est avantageux de fonctionner avec des durées fixes pour chacune des étapes, ces durées étant déterminées en fonction des objectifs de traitement.

En outre, les étapes de vidange 40 et d'alimentation 2 ayant lieu simultanément permettent avantageusement de :
- apporter un peu de matière organique afin d'éliminer les nitrates (ou nitrites) présents dans le lit de boues
- sélectionner les populations qui croissent facilement sous forme de flocs denses (clusters) ou même en granules, notamment les populations dé-ammonifiantes et nitritantes,
- éliminer les particules les plus fines des effluents et du milieu réactionnel par filtration au travers de la masse de boues en décantation.

De plus, la régulation du procédé par les moyens de calculs permet d'optimiser en continu les réactions chimiques de nitritation et de dé-ammonification et ainsi rendre le procédé plus rapide et plus efficient, notamment en stoppant la phase d'aération exactement au moment où la stoichiométrie NH4/NO2 nécessaire à la déammonification est atteinte.

Suivant l'invention, lors de l'étape d'alimentation 2, on introduit le volume d'effluents à traiter près du fond du réacteur 1, et lors de l'étape de vidange 40, on évacue la fraction clarifiée du contenu du réacteur 1 à un niveau d'évacuation prédéfini 42 en surface du contenu du réacteur.

On maintient le niveau du contenu du réacteur 1 sensiblement constant lors des étapes de vidange 40 et d'alimentation 2. Avantageusement, le système de reprise 41 peut rester fixe dans le réacteur 1.

Pour cela, des fractions d'effluents à traiter sont délivrées de préférence de manière successive à l'aide du dispositif d'alimentation 3. De même, des fractions clarifiées sont vidangées de préférence de manière successive à l'aide du système de reprise 41.

Selon un autre mode de réalisation, des fractions d'effluents à traiter et/ ou des fractions clarifiées sont respectivement délivrées et/ou vidangées en une fois.

Plus particulièrement, lors de l'étape d'alimentation 2, on introduit le volume d'effluents à traiter dans le lit de boues, de préférence intimement et uniformément de manière à favoriser l'homogénéisation des boues avec les effluents.

Selon un mode de réalisation préféré, on introduit le volume d'effluents à traiter par une injection dirigée vers un fond du réacteur 1 de façon à générer des turbulences dans le lit de boues se trouvant au fond du réacteur 1. On introduit le volume d'effluents à traiter par au moins un tube d'alimentation 4 perforé de trous orientés vers le fond du réacteur 1.

En se reportant à figure 1, le volume d'effluent à traiter est introduit, selon un autre mode de réalisation préféré, par des trous, orientés vers la surface du contenu du réacteur, munis de déflecteurs de sorte que chaque trou fait face respectivement à un déflecteur. Les trous présentent une forme sensiblement circulaire. De préférence, chaque déflecteur présente une forme de cône, dont le sommet du cône est dirigé vers la surface du contenu du réacteur et dont la base est dirigée vers un trou. En outre chaque axe de révolution d'un cône est respectivement confondu avec chaque axe d'un trou de sorte que chaque axe d'un trou forme respectivement avec chaque génératrice de cône un angle égal à un démi-angle conique. Lors de l'introduction d'une fraction d'effluent via les trous, le liquide est dévié vers le fond du réacteur 1 par les déflecteurs.

Chaque trou est apte à provoquer des turbulences sur sensiblement 10 m² du fond du réacteur 1. Plus généralement, un à deux trous peuvent être utilisés pour provoquer des turbulences sur sensiblement 10 m² du fond du réacteur 1.

Ces dispositions ont pour avantages de favoriser l'homogénéisation des boues avec les effluents et de faire réagir le maximum d'effluents, c'est-à-dire l'azote sous forme d'ammonium, présents et/ou emprisonnés dans les boues. Ainsi, on peut réduire la quantité de boues.

Selon l'invention, on réalise l'étape de vidange 40 par un système de reprise 41 positionné dans le réacteur 1, de préférence à un niveau d'évacuation 42 prédéfini correspondant à une distance aussi faible que possible avec la surface du contenu du réacteur 1. Une fois l'étape de décantation 30 effectuée, on observe un gradient de concentration en boues : le fond du réacteur 1 est rempli de boues, tandis que la surface du contenu du réacteur 1 présente de l'eau sensiblement claire et traitée. Le système de reprise 41 comprend par exemple une goulotte ou un tube perforé pour évacuer l'eau claire et traitée.

Selon l'invention, on utilise un capteur de surface 43 pour détecter la surface du contenu du réacteur. Pendant l'étape combinée d'alimentation 2 et de vidange 40, on régule le débit de vidange et/ou le débit d'alimentation de manière à maintenir un niveau sensiblement constant dans le réacteur 1.

L'introduction d'effluents vers le fond du réacteur engendre des turbulences qui créent un déplacement ascensionnel modéré des boues, ou même une légère expansion du lit de boues. Lorsque le lit de boues s'expanse de manière excessive, c'est-à-dire que la concentration en boues atteint une valeur prédéterminée à un niveau de référence 32 dans le réacteur 1, on stoppe les étapes d'alimentation 2 et de vidange 40. Le niveau de référence 32 est choisi à une distance prédéterminée en-dessous d'un niveau d'évacuation 42 où est prélevé le contenu lors de l'étape de vidange 40 (ou on remonte une alerte de risque de perte partielle de boues). De préférence notamment dans un réacteur où le niveau d'évacuation 42 est à environ 3 à 5 mètres au-dessus du fond du réacteur 1, le niveau de référence 32 se situe à environ 50 cm en-dessous du niveau d'évacuation 42. De cette manière, on limite le risque de voir des boues s'infiltrer dans le système de reprise 41.

Selon un mode particulier de réalisation, l'installation est dimensionnée (taille et débit d'effluents) afin que le lit de boues compte-tenu de sa vitesse de décantation ne s'expanse pas au-delà du niveau de référence 32.

On détecte le niveau du lit de boues dans le réacteur 1 par un capteur de niveau 33 de matière en suspension placé au niveau de référence 32 afin d'alerter l'opérateur en cas de niveau anormalement élevé du lit de boues. Le capteur de niveau 33 de matière en suspension détecte la concentration en boues ; la concentration en boues étant de préférence comprise entre 1 et 5 g/L, voire éventuellement plus si le système fonctionne avec des boues granulaires.

Lors du procédé, une concentration en boues est maintenue dans le réacteur 1 dans le but de :
- éviter une concentration excessive pouvant occasionner une décantabilité insuffisante de la boue,
- éviter une concentration insuffisante qui ne permettrait pas de garantir des âges de boues nécessaires au maintien de la biomasse nitritante et dé-ammonifiante.

Un capteur de fond 23 de réacteur détecte l'épaisseur du lit de boues, et on décharge les boues lorsque l'épaisseur dépasse un seuil prédéterminé 22.

La concentration en boues est maintenue au moyen d'extractions régulières par un système d'extraction des boues 51. Le système d'extraction des boues 51 est installé sur le réacteur 1 et comprend une pompe et une vanne. Il est apte à fonctionner durant la première étape d'aération 10, la deuxième étape en anoxie 20 (voir flèches 52 à la figure 1) et l'étape de décantation 30, et même les étapes d'alimentation 2 et de vidange 40.

Néanmoins en cas de présence excessive de boues ou de matière en suspension excessives dans l'effluent rejeté en sortie de réacteur (notamment en début de phase d'alimentation), on renvoie à l'alimentation le contenu évacué lors de l'étape de vidange 40 si le contenu évacué présente une concentration en boues sensiblement supérieure à un seuil prédéterminé, par exemple 5g/L. Selon un autre mode de réalisation, un système de séparation tertiaire, de type filtration de surface, peut être installé dans le cas d'une demande de concentration très faible en matière en suspension de l'eau traitée.

Selon un autre mode de réalisation, il est prévu une installation de traitement d'effluents comprenant plusieurs réacteurs mis en oeuvre de manière parallèle. Par exemple, lorsque les étapes d'alimentation 2 et de vidange 40 ont lieu dans un réacteur, les autres peuvent être en train d'exécuter l'un l'étape de décantation 30, l'autre la première étape d'aération 10 et encore un autre la deuxième étape en anoxie 20. De préférence, l'installation de traitement d'effluents comprend quatre réacteurs. De cette manière, il est possible de traiter de forts débits d'effluents entrants. Le procédé peut être adapté à un plus grand ou plus petit nombre de réacteurs.

En cas d'arrêt d'un réacteur pour un quelconque problème, le procédé est accéléré, ce qui permet de continuer le traitement des effluents avec une légère altération de l'efficacité lorsque la concentration en azote est maximale.

Selon encore un autre mode de réalisation, le procédé met en oeuvre des réactions chimiques qui produisent des nitrates en faible quantité (environ 10% de l'azote de l'eau brute, soit 3 à 10 mgN-NO3-/L en général). Si la présence de nitrates dans l'eau traitée est jugée excessive, il est prévu de recirculer (lorsque le débit hydraulique le permet ou bien en ayant tenu compte de cette recirculation dans le dimensionnement hydraulique de l'installation) des nitrates à l'entrée du réacteur. Alternativement, il est prévu de recirculer des nitrates en amont du réacteur 1.

En outre, il est prévu au moins une étape préalable de traitement des matières en suspension et de la matière organique soluble, par exemple « en anoxie », en amont du réacteur 1. Il est prévu, selon encore un autre mode de réalisation, de recirculer des nitrates avant cette étape préalable.

En fonction du rendement désiré, la recirculation des nitrates peut être ajustée (100% de recirculation en moyenne pour 50% d'élimination des nitrates par exemple).

Bien sûr, l'invention n'est pas limitée aux exemples qui viennent d'être décrits et de nombreux aménagements peuvent être apportés à ces exemples sans sortir du cadre de l'invention.

Par exemple, l'invention peut concerner tout effluent contenant de l'ammonium.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres, et dans la mesure où elle correspondent à l'invention, telle qu'elle est définie par les revendications.

## Revendications

1. Procédé de traitement d'effluents contenant de l'azote sous forme d'ammonium, mettant en oeuvre des réactions chimiques d'oxydation et réduction dans un réacteur batch séquencé (1), le procédé comprenant une séquence de quatre étapes qui est exécutée cycliquement dans cet ordre :
- une étape combinée d'alimentation et de vidange, comprenant une étape d'alimentation (2) au cours de laquelle on introduit un volume d'effluents à traiter dans le réacteur (1) et une étape de vidange (40), au cours de laquelle on évacue une fraction clarifiée du contenu du réacteur, lesdites étapes de vidange (40) et d'alimentation (2) ayant lieu simultanément,
- au moins une première étape d'aération (10), au cours de laquelle on injecte de l'oxygène ou de l'air dans le réacteur (1) pour une oxydation partielle de l'ammonium en nitrites,
- une deuxième étape (20), en anoxie, au cours de laquelle en interrompant l'injection d'oxygène ou d'air on produit de l'azote gazeux en faisant réagir les nitrites produits et l'ammonium restant,
- une étape de décantation (30), au cours de laquelle des boues se déposent au fond du réacteur (1) et le contenu du réacteur se clarifie à proximité de sa surface,
dans lequel lors de l'étape d'alimentation (2), on introduit le volume d'effluents à traiter près du fond du réacteur (1),
dans lequel lors de l'étape de vidange (40), on évacue la fraction clarifiée du contenu du réacteur à un niveau d'évacuation (42) prédéfini proche de la surface du contenu du réacteur,
dans lequel on maintient le niveau du contenu du réacteur sensiblement constant lors des étapes de vidange (40) et d'alimentation (2) par régulation du débit de vidange et/ou du débit d'alimentation en détectant la surface du contenu du réacteur à l'aide d'un capteur de surface,
dans lequel on stoppe les étapes d'alimentation (2) et de vidange (40) lorsque le lit de boues s'expanse au-dessus d'un niveau de référence (32) dans le réacteur (1), le niveau de référence (32) étant choisi à une distance prédéterminée en-dessous d'un niveau d'évacuation (42) où est prélevé le contenu lors de l'étape de vidange (40).

2. Procédé selon la revendication 1, **caractérisé en ce que** l'on introduit le volume d'effluents à traiter dans le lit de boues, de préférence intimement et uniformément de manière à favoriser l'homogénéisation des boues avec les effluents.

3. Procédé selon la revendication 1 ou 2, **caractérisé en ce que** l'on introduit le volume d'effluents à traiter par une injection dirigée vers un fond du réacteur (1) de façon à générer des turbulences dans le lit de boues se trouvant au fond du réacteur (1).

4. Procédé selon l'une des revendications 1 à 3, **caractérisé en ce que** l'on introduit le volume d'effluents à traiter par au moins un tube d'alimentation perforé (4) de trous orientés vers le fond du réacteur.

5. Procédé selon la revendication 4, **caractérisé en ce que** lesdits trous sont munis de déflecteurs, chaque trou étant apte à provoquer des turbulences sur sensiblement 10 m 2 du fond du réacteur (1).

6. Procédé selon l'une quelconque des revendications précédentes, **caractérisé en ce que** l'on détecte le niveau du lit de boues dans le réacteur (1) par un capteur de matière en suspension placé au niveau de référence (32).

7. Procédé selon la revendication 6, **caractérisé en ce que** le capteur de matière en suspension détecte la concentration en boues, la concentration en boues étant de préférence comprise entre 1 et 10 g/L.

8. Procédé selon l'une des revendications précédentes, **caractérisé en ce qu'**un capteur de fond de réacteur détecte l'épaisseur du lit de boues, et on décharge les boues lorsque l'épaisseur dépasse un seuil prédéterminé.

9. Procédé selon l'une quelconque des revendications précédentes, **caractérisé en ce que** l'on renvoie à l'étape d'alimentation (2) le contenu évacué lors de l'étape de vidange (40) si le contenu évacué présente une concentration en boues sensiblement supérieure à une valeur prédéterminée.

10. Installation de traitement d'effluents contenant de l'azote sous forme d'ammonium **caractérisée en ce qu'**elle comprend un réacteur batch séquencé (1), un dispositif d'alimentation (3) d'un volume d'effluents près du fond du réacteur (1), un système de reprise (41) d'une fraction clarifiée du contenu du réacteur, proche de la surface du contenu du réacteur, un système d'extraction de boues (51) et des moyens d'aération (11), le réacteur (1) étant agencé et équipé pour la mise en oeuvre d'un procédé selon l'une ou plusieurs des revendications 1 à 9, l'installation comprenant au moins quatre capteurs à l'intérieur du réacteur pour mesurer la concentration respectivement en ammonium, en nitrites, en nitrates et en matières en suspension, et des moyens de calcul qui sont configurés pour traiter les mesures en temps réel et contrôler le déroulement du procédé selon l'une ou plusieurs des revendications 1 à 9 en mode automatique, l'installation comprenant en outre un capteur de surface, les moyens de calculs étant configurés pour maintenir le niveau du contenu du réacteur sensiblement constant lors des étapes de vidange (40) et d'alimentation (2) par régulation du débit de vidange et/ou du débit d'alimentation en détectant la surface du contenu du réacteur à l'aide du capteur de surface, et étant configurés pour stopper les étapes d'alimentation (2) et de vidange (40) lorsque le lit de boues s'expanse au-dessus d'un niveau de référence (32) dans le réacteur (1), le niveau de référence (32) étant choisi à une distance prédéterminée en-dessous d'un niveau d'évacuation (42) où est prélevé le contenu lors de l'étape de vidange (40).

## Patentansprüche

1. Verfahren zur Behandlung von Abwässern, die Stickstoff in Form von Ammonium enthalten, wobei chemische Oxidations- und Reduktionsreaktionen in einem Sequencing-Batch-Reaktor (1) durchgeführt werden, wobei das Verfahren eine Sequenz von vier Schritten umfasst, die zyklisch in dieser Reihenfolge ausgeführt wird:
- einen kombinierten Beschickungs- und Entleerungsschritt, der einen Beschickungsschritt (2), bei dem ein Volumen an zu behandelnden Abwässern in den Reaktor (1) eingeleitet wird, und einen Entleerungsschritt (40) umfasst, bei dem eine geklärte Fraktion des Reaktorinhalts abgelassen wird, wobei der Entleerungsschritt (40) und der Beschickungsschritt (2) gleichzeitig stattfinden,
- mindestens einen ersten Belüftungsschritt (10), bei dem Sauerstoff oder Luft in den Reaktor (1) für eine teilweise Oxidation von Ammonium zu Nitriten eingeleitet wird,
- einen zweiten Schritt (20) unter Anoxie, bei dem durch Unterbrechung der Sauerstoff- oder Lufteinleitung gasförmiger Stickstoff erzeugt wird, indem die erzeugten Nitrite und das verbleibende Ammonium miteinander reagieren,
- einen Absetzschritt (30), bei dem sich Schlämme am Boden des Reaktors (1) absetzen und sich der Inhalt des Reaktors in der Nähe seiner Oberfläche klärt,
wobei während des Beschickungsschritts (2) das Volumen der zu behandelnden Abwässer nahe dem Boden des Reaktors (1) eingeleitet wird,
wobei während des Entleerungsschritts (40) die geklärte Fraktion des Reaktorinhalts auf einen vorbestimmten Ausleitungspegel (42) nahe der Oberfläche des Reaktorinhalts abgelassen wird,
wobei der Pegel des Reaktorinhalts während des Entleerungsschritts (40) und des Beschickungsschritts (2) im Wesentlichen konstant gehalten wird, indem die Entleerungsrate und/oder die Beschickungsrate durch Erfassen der Oberfläche des Reaktorinhalts mit Hilfe eines Oberflächensensors reguliert wird,
wobei der Beschickungsschritt (2) und der Entleerungsschritt (40) gestoppt werden, wenn sich das Schlammbett über einen Referenzpegel (32) in dem Reaktor (1) ausdehnt, wobei der Referenzpegel (32) in einem vorbestimmten Abstand unterhalb eines Ausleitungspegels (42) gewählt wird, bei dem der Inhalt während des Entleerungsschritts (40) entnommen wird.

2. Verfahren nach Anspruch 1, **dadurch gekennzeichnet, dass** das zu behandelnde Abwasservolumen in das Schlammbett eingeleitet wird, vorzugsweise eng und gleichmäßig, um die Homogenisierung der Schlämme mit dem Abwasser zu fördern.

3. Verfahren nach Anspruch 1 oder 2, **dadurch gekennzeichnet, dass** das zu behandelnde Abwasservolumen durch eine auf einen Boden des Reaktors (1) gerichtete Einspritzung eingeleitet wird, um Turbulenzen in dem am Boden des Reaktors (1) befindlichen Schlammbett zu erzeugen.

4. Verfahren nach einem der Ansprüche 1 bis 3, **dadurch gekennzeichnet, dass** das zu behandelnde Abwasservolumen durch mindestens ein perforiertes Beschickungsrohr (4) mit Löchern, die zum Boden des Reaktors gerichtet sind, eingeleitet wird.

5. Verfahren nach Anspruch 4, **dadurch gekennzeichnet, dass** die Löcher mit Deflektoren versehen sind, wobei jedes Loch geeignet ist, Turbulenzen auf im Wesentlichen 10 m² des Bodens des Reaktors (1) zu verursachen.

6. Verfahren nach einem der vorhergehenden Ansprüche, **dadurch gekennzeichnet, dass** der Pegel des Schlammbetts im Reaktor (1) durch einen Schwebstoffsensor erfasst wird, der am Referenzpegel (32) angeordnet ist.

7. Verfahren nach Anspruch 6, **dadurch gekennzeichnet, dass** der Schwebstoffsensor die Schlammkonzentration erfasst, wobei die Schlammkonzentration vorzugsweise im Bereich von 1 bis 10 g/L liegt.

8. Verfahren nach einem der vorhergehenden Ansprüche, **dadurch gekennzeichnet, dass** ein Sensor am Boden des Reaktors die Dicke des Schlammbetts erfasst und die Schlämme ausgetragen wird, wenn die Dicke einen vorbestimmten Schwellenwert überschreitet.

9. Verfahren nach einem der vorhergehenden Ansprüche, **dadurch gekennzeichnet, dass** der während des Entleerungsschritts (40) abgelassene Inhalt zum Beschickungsschritt (2) zurückgeleitet wird, wenn der abgelassene Inhalt eine Schlammkonzentration aufweist, die wesentlich höher als ein vorbestimmter Wert ist.

10. Anlage zur Behandlung von Abwässern, die Stickstoff in Form von Ammonium enthalten, **dadurch gekennzeichnet, dass** sie einen Sequencing-Batch-Reaktor (1), eine Vorrichtung (3) zur Beschickung der Nähe des Bodens des Reaktors (1) mit einem Abwasservolumen, ein System (41) zur Übernahme einer geklärten Fraktion des Reaktorinhalts nahe der Oberfläche des Reaktorinhalts, ein Schlammabzugssystem (51) und eine Belüftungsmittel (11) umfasst, wobei der Reaktor (1) zur Durchführung eines Verfahrens nach einem oder mehreren der Ansprüche 1 bis 9 eingerichtet und ausgerüstet ist, wobei die Anlage mindestens vier Sensoren im Inneren des Reaktors umfasst, um die Konzentration jeweils von Ammonium, von Nitriten, von Nitraten und von Schwebstoffen zu messen, und Rechenmittel, die so konfiguriert ist, dass sie die Messungen in Echtzeit verarbeiten und den Ablauf des Verfahrens nach einem oder mehreren der Ansprüche 1 bis 9 im automatischen Modus steuern, wobei die Anlage ferner einen Oberflächensensor umfasst, wobei die Rechenmittel so konfiguriert sind, dass sie den Pegel des Reaktorinhalts während des Entleerungsschritts (40) und des Beschickungsschritts (2) im Wesentlichen konstant halten, indem sie die Entleerungsmenge und/oder die Beschickungsmenge regeln, indem sie die Oberfläche des Reaktorinhalts mit Hilfe des Oberflächensensors erfassen, und so konfiguriert sind, dass sie den Beschickungsschritt (2) und den Entleerungsschritt (40) stoppen, wenn sich das Schlammbett über einen Referenzpegel (32) in dem Reaktor (1) ausdehnt, wobei der Referenzpegel (32) in einem vorbestimmten Abstand unterhalb eines Ausleitungspegels (42) gewählt ist, bei dem der Inhalt während des Entleerungsschritts (40) entnommen wird.

## Claims

1. Process for treating effluents containing nitrogen in the form of ammonium, using chemical oxidation and reduction in a sequenced batch reactor (1), the method comprising a sequence of four steps which is carried out cyclically in this order:
- a combined feeding and emptying stage, comprising a feeding stage (2), during which a volume of effluent to be treated is introduced into the reactor (1), and an emptying stage (40), during which a clarified fraction of the reactor contents is discharged, said emptying (40) and feeding (2) stages taking place simultaneously,
- at least one first aeration stage (10), during which oxygen or air is injected into the reactor (1) for partial oxidation of the ammonium to nitrite,
- a second stage (20), in anoxia, during which, by interrupting the injection of oxygen or air, gaseous nitrogen is produced by reacting the nitrites produced and the remaining ammonium,
- a settling stage (30), during which sludge settles to the bottom of the reactor (1) and the contents of the reactor are clarified near its surface,
in which, during the feed stage (2), the volume of effluent to be treated is introduced near the bottom of the reactor (1),
in which, during the emptying step (40), the clarified fraction of the reactor contents is evacuated to a predefined evacuation level (42) close to the surface of the reactor contents,
in which the level of the contents of the reactor is kept substantially constant during the emptying (40) and feeding (2) stages by regulating the emptying flow rate and/or the feeding flow rate by detecting the surface of the contents of the reactor using a surface sensor,
in which the feeding (2) and emptying (40) steps are stopped when the sludge bed expands above a reference level (32) in the reactor (1), the reference level (32) being chosen at a predetermined distance below a discharge level (42) from which the contents are taken during the emptying step (40).

2. Method according to claim 1, **characterised in that** the volume of effluent to be treated is introduced into the bed of sludge, preferably intimately and uniformly so as to promote homogenisation of the sludge with the effluent.

3. Method according to claim 1 or 2, **characterised in that** the volume of effluent to be treated is introduced by an injection directed towards the bottom of the reactor (1) so as to generate turbulence in the bed of sludge located at the bottom of the reactor (1).

4. Method according to one of claims 1 to 3, **characterised in that** the volume of effluent to be treated is introduced through at least one feed tube (4) perforated with holes directed towards the bottom of the reactor.

5. Method according to claim 4, **characterised in that** the said holes are provided with deflectors, each hole being capable of causing turbulence over substantially 10 m 2 of the bottom of the reactor (1).

6. Method according to any one of the preceding claims, **characterised in that** the level of the sludge bed in the reactor (1) is detected by a suspended matter sensor placed at the reference level (32).

7. Method according to claim 6, **characterised in that** the suspended matter sensor detects the sludge concentration, the sludge concentration preferably being between 1 and 10 g/L.

8. Method according to one of the preceding claims, **characterised in that** a sensor at the bottom of the reactor detects the thickness of the bed of sludge, and the sludge is discharged when the thickness exceeds a predetermined threshold.

9. Method according to any one of the preceding claims, **characterised in that** the contents discharged during the emptying step (40) are returned to the feed step (2) if the discharged contents have a sludge concentration substantially greater than a predetermined value.

10. installation for treating effluent containing nitrogen in the form of ammonium, **characterised in that** it comprises a sequenced batch reactor (1), a device (3) for feeding a volume of effluent close to the bottom of the reactor (1), a system (41) for collecting a clarified fraction of the reactor contents, close to the surface of the reactor contents, a sludge extraction system (51) and aeration means (11), the reactor (1) being arranged and equipped for implementing a process according to one or more of claims 1 to 9, the installation comprising at least four sensors inside the reactor for measuring the concentration of ammonium, nitrites, nitrates and suspended solids respectively, and computing means which are configured to process the measurements in real time and to control the progress of the process according to one or more of claims 1 to 9 in automatic mode, the installation also comprising a surface sensor, the calculation means being configured to keep the level of the contents of the reactor substantially constant during the emptying (40) and feeding (2) stages by regulating the emptying flow rate and/or the feeding flow rate by detecting the surface of the contents of the reactor using the surface sensor, and being configured to stop the feeding (2) and emptying (40) stages when the sludge bed expands above a reference level (32) in the reactor (1), the reference level (32) being chosen at a predetermined distance below a discharge level (42) from which the contents are taken during the emptying stage (40).
